# EUROPÄISCHE PATENTSCHRIFT

(11) **EP 1 027 582 B1**
(45) Veröffentlichungstag und Bekanntmachung des Hinweises auf die Patenterteilung: **10.12.2003**
(21) Anmeldenummer: 98962194.1
(22) Anmeldetag: 30.10.1998
(51) Int. Cl.: G01J 1/00

(54) **SPEKTROMETERANLAGE MIT VAKUUM-ULTRAVIOLETT-SPEKTROMETER UND DETEKTORVORRICHTUNG MIT MIKROSPHÄRENPLATTE ZUR SPEKTROSKOPISCHEN PARTIALDRUCKMESSUNG IN EINER UMGEBUNG MIT HOHEN MAGNETFELDERN**
SPECTROMETER FACILITY WITH A VACUUM ULTRAVIOLET SPECTROMETER AND A DETECTOR DEVICE WITH A MICROSPHERIC PLATE FOR SPECTROSCOPIC PARTIAL PRESSURE MEASUREMENT IN AN ENVIRONMENT WITH HIGH MAGNETIC FIELDS
INSTALLATION SPECTROMETRIQUE A SPECTROMETRE A ULTRAVIOLET EXTREME ET DISPOSITIF DE DETECTION A PLAQUETTE A MICROSPHERES POUR LA MESURE SPECTROSCOPIQUE DE LA PRESSION PARTIELLE DANS UN ENVIRONNEMENT COMPORTANT DES CHAMPS MAGNETIQUES ELEVES

(30) Priorität: 31.10.1997 DE 19748172
(43) Veröffentlichungstag der Anmeldung: 16.08.2000
(73) Patentinhaber: Forschungszentrum Jülich GmbH, 52425 Jülich (DE)
(72) Erfinder: EICH, Thomas, H., D-53859 Niederkassel (DE); FINKEN, Karl, Heinz, D-52353 Düren (DE); MANK, Günter, D-52445 Titz (DE)
(74) Vertreter: Möbus, Steffen
(86) Internationale Anmeldenummer: DE9803177
(87) Internationale Veröffentlichungsnummer: WO99023460

(56) Entgegenhaltungen:
- EP-A- 0 682 268
- GB-A- 1 335 451
- US-A- 4 166 219
- VELOSO JFCA ET AL: "A GAS PROPORTIONAL SCINTILLATION COUNTER COUPLED TO A MICROSTRIP GAS CHAMBER PHOTOSENSOR" IEEE NUCLEAR SCIENCE SYMPOSIUM CONFERENCE, Bd. 1, 2. November 1996, Seiten 73-76, XP002105926
- VAN SONSBEEK R ET AL: "Light yield of liquid and solid xenon irradiated with gamma-rays" NUCLEAR INSTRUMENTS & METHODS IN PHYSICS RESEARCH, SECTION - A: ACCELERATORS, SPECTROMETERS, DETECTORS AND ASSOCIATED EQUIPMENT, Bd. A367, Nr. 1, 11. Dezember 1995, Seite 362-366 XP004006223

## Beschreibung

Die vorliegende Erfindung betrifft eine Detektorvorrichtung für ein Vakuum-Ultraviolett (VUV)-Spektrometer zum Nachweis einer VUV-Strahlung mit einer als Sekundärelektronenvervielfacher wirkenden Mikrosphärenplatte (MSP) gemäß Oberbegriff von 1. Zudem betrifft die Erfindung eine Spektrometeranlage mit einem VUV-Spektrometer, das einen Eintrittsspalt und einen Austrittsspalt aufweist, und mit einer Detektorvorrichtung gemäß Oberbegriff von Anspruch 5 und eine Mikrosphärenplatte zur Sekundärelektronenvervielfachung gemäß Oberbegriff Anspruch 10.

Der wissenschaftliche Hintergrund und der Stand der Technik werden im folgenden kurz beschrieben:

In Fusionsexperimenten mit magnetischem Einschluß wird der Brennstoff Deuterium untersucht. Ein Produkt des Fusionsbrennen ist Helium. Es ist somit erforderlich, Helium in nur sehr kleinen Konzentrationen in dem Majoritätsgas Deuterium nachzuweisen. Übliche Verfahren, wie z. B. die Massenspektrometrie, können zu diesem Zweck nicht angewendet werden, da die Massen von Deuterium (D2=4,03 au) und Helium (He=4,003 au) nur geringfügig voneinander abweichen. Aus diesem Grunde wurde versucht, eine Konzentrationsbestimmung durch spektroskopische Untersuchungen vorzunehmen. Der spektroskopische Bereich des sichtbaren Lichtes wurde untersucht. Dazu wurde das Licht, welches mit einer Penningentladung angeregt wurde, über Lichtleiter aus der Experimentierhalle geführt und dort ausgewertet. Die Auswertung beinhaltet im wesentlichen die spektrale Zerlegung des Lichtes und Messung der Intensitäten einzelner atomarer Linien mittels eines handelsüblichen Spektrometers.

Das Herausführen des Lichtes mittels Lichtleiter ist notwendig, weil starke Magnetfelder vorherrschen, die den Einsatz von geeigneten Detektoren praktisch verbieten. Die Güte dieses Verfahrens des Standes der Technik ist jedoch durch die Physik begrenzt. Aufgrund der Tatsache, daß Deuterium ein Molekül ist, besitzt es oberhalb von 80 nm ein Bandenspektrum, welches sich bis in den sichtbaren Bereich erstreckt (Wellenlänge 400 nm bis 800 nm). Zudem arbeiten Lichtleiter nur ab ca. 200 nm bis in den sichtbaren Bereich (und z. T. in den Infrarotbereich). Das Licht des Deuteriums und der begrenzte Arbeitsbereich von Lichtleitern verhindern eine genauere Bestimmung der Konzentration des Lichtes von Helium auf ca. 2 %. Um dieses Problem zu lösen, wird im Stand der Technik der Bereich des Vakuum-Ultraviolett (VUV) genutzt (Wellenlänge 40 nm bis 80 nm). Es konnte im Labor gezeigt werden, daß Helium auf diese Weise bis zu Konzentrationen von 0,05 % nachgewiesen werden kann.

Der zum Nachweis der VUV-Strahlung benutzte Detektor ist im Stand der Technik ein sogenanntes Channeltron, welches mit dem Prinzip der Sekundärelektronenvervielfachung arbeitet. Dieser Detektortyp kann jedoch nicht betrieben werden, da die eingangs erwähnten Streufelder die Meßsignale verfälschen. Die VUV-Strahlung kann nicht, wie im sichtbaren Vorbild, durch Lichtleiter aus der Experimentierhalle geführt werden, da die VUV-Strahlung die Eigenschaft hat, sich nur im Vakuum auszubreiten. Es muß daher zur Anwendung des beschriebenen Verfahrens ein Detektor eingesetzt werden, der einerseits VUV-Strahlung in ausreichendem Maße nachweisen kann, des weiteren aber nicht z. B. von den Magnetfeldern des Fusionsexperimentes TEXTOR-94 beeinflußt wird.

Seit etwa Mitte 1995 werden sogenannte Microsphereplates (MSP), im folgenden als Mikrosphärenplatten übersetzt, hergestellt, die als Sekundärelektronenvervielfacher arbeiten.

Eine solche Mikrosphärenplatte hat jedoch gegenüber einem Channeltron den entscheidenden Vorteil, das es nicht von Magnetfeldern beeinflußt wird. Es ist allerdings bisher von Nachteil, daß eine solche Mikrosphärenplatte nicht im Wellenlängenbereich von 40 nm bis 80 nm zwar eingesetzt werden kann, um eine genaue Bestimmung der Konzentration des Lichtes von Helium oder aber auch anderer VUV-Photonen zu erhalten, die Effizienz aber so gering ist, daß eine praktische Anwendung ausscheidet.

Die Aufgabe der vorliegenden Erfindung besteht deshalb darin, eine Detektorvorrichtung für ein Vakuum-Ultraviolett-Spektrometer mit einer als Sekundärelektronenvervielfacher wirkenden Mikrosphärenplatte zu schaffen, mit der der Nachweis von VUV-Photonen in sehr hoher Güte erfolgen kann.

Die Aufgabe wird gemäß Anspruch 1 dadurch gelöst, daß auf der Mikrosphärenplatte eine Beschichtung aus Magnesiumfluorid (MgF2) ausgebildet ist.

Die Aufgabe wird auch durch eine Spektrometeranlage mit einem VUV-Spektrometer, das einen Eintrittsspalt und einen Austrittsspalt aufweist, und mit einer Detektorvorrichtung gelöst, die dadurch gekennzeichnet ist, daß vor dem Eintrittsspalt eine Penningentladung und vor dem Austrittsspalt eine Detektorvorrichtung angebracht ist, wobei die Detektorvorrichtung eine mit Magnesiumfluorid (MgF2) beschichtete Mikrosphärenplatte umfaßt.

Die Aufgabe wird zudem durch eine Mikrosphärenplatte zur Sekundärelektronenvervielfachung gemäß Anspruch 10 gelöst, die durch ein mit Magnesiumfluorid (MgF2) beschichtete Oberfläche gekennzeichnet ist.

Durch Verwendung einer mit Magnesiumfluorid (MgF2) beschichteten Mikrosphärenplatte in einer Detektorvorrichtung für ein Vakuum-Ultraviolett-Spektrometer bzw. in einer solchen Detektorvorrichtung zur Verwendung in einer Spektrometeranlage, können die Nachweisgrenzen für VUV-Photonen und somit die Nachweisgrenze für durch diese erzeugten Elektronen auch in der Nähe hoher magnetischer Felder zu kleinen Partialdrücken hin vergrößert werden.

Gemäß Anspruch 2 ist es von Vorteil, daß die Beschichtung aus Magnesiumfluorid auf der stromaufwärts liegenden Oberfläche der Mikrosphärenplatte ausgebildet ist. Die Beschichtung ist somit in technisch einfacher Weise und kostengünstig nur auf der Oberfläche ausgebildet, auf die die VUV-Photonen fallen und Elektronen erzeugen.

Ein weiterer Vorteil gemäß Anspruch 3 beruht darin, daß im Strahlungsweg stromaufwärts der Mikrosphärenplatte ein Repeller angeordnet ist. Ohne die Anordnung eines Repellers bewegen sich etwa 50 % der Elektronen entgegengesetzt der Richtung des Einfalls der sie erzeugenden Photonen und fallen letztlich wieder auf die Oberfläche zurück. Während dieses kurzen Weges werden die Elektronen durch Magnetfelder beeinflußt. Mit der Anordnung eines Repellers kann dies verhindert werden. Durch den Repeller wird die Nachweisgrenze zusätzlich erheblich (100%) verbessert.

Gemäß Anspruch 4 ist es von Vorteil, daß der Repeller ein Drahtgitter umfaßt, das ein vorbestimmtes Spannungspotential aufweist. Dieses vorbestimmte Potential hindert die beim Auftreffen der VUV-Strahlung auf die Magnesiumfluorid-Beschichtung entstehenden Elektronen daran, sich von dieser in Richtung auf das Gitter zu entfernen.

Ein weiterer Vorteil gemäß Anspruch 5 besteht darin, daß der Repeller in geringem Abstand vor der Mikrosphärenplatte angeordnet ist. Dadurch wird der Laufweg der Elektronen zwischen der Magnesiumfluorid-Beschichtung und dem Repeller soweit verringert, daß praktisch keine Magnetfeldabhängigkeit mehr vorliegt.

Die Vorteile der Merkmale der Ansprüche 1 bis 5 weist auch eine Spektrometeranlage gemäß einem der Ansprüche 6 bis 10 mit einer entsprechenden, erfindungsgemäßen Detekorvorrichtung auf.

Eine Mikrosphärenplatte gemäß Anspruch 10 hat die bereits in Verbindung mit Anspruch 1 und Anspruch 6 genannten Vorteile auf, daß nämlich die Nachweisgrenze von Elementen, die im Bereich zwischen 40 - 80 nm deutliche Linienübergänge besitzen, wie z. B. Helium, Neon, Argon und Stickstoff, in einer Detektorvorrichtung deutlich herabgesetzt werden kann.

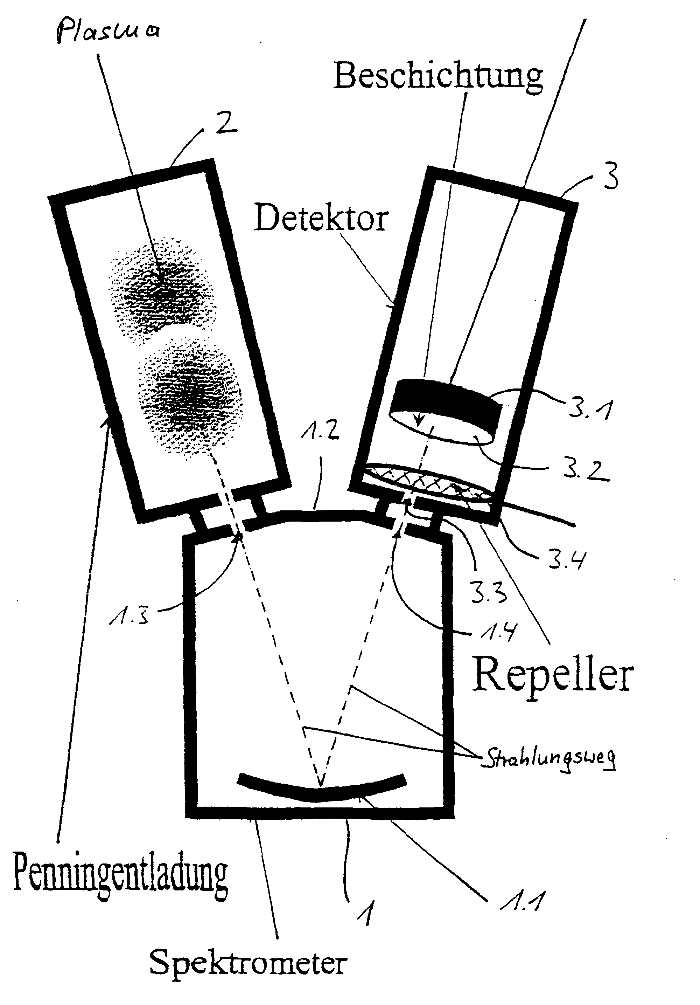

Eine Ausführungsform der vorliegenden Erfindung wird im folgenden anhand der einzigen Figur näher beschrieben.

Die Figur zeigt eine schematische Ansicht im Schnitt einer Spektrometeranlage mit einer Detektorvorrichtung und einer Mikrosphärenplatte gemäß vorliegender Erfindung.

In der Figur ist ein Spektrometer 1 für eine Vakuum-Ultraviolett-Spektroskopie dargestellt. In dem Spektrometer 1 befindet sich ein Reflektor 1.1. An der gegenüberliegenden Seite 1.2 des Spektrometers 1 ist ein Eintrittsspalt 1.3 und ein Austrittsspalt 1.4 ausgebildet. An dem Eintrittsspalt 1.3 ist eine Penningentladung 2 angebracht. Die Penningentladung 2 ist derart ausgebildet, daß sie vakuumtauglich und einer Beobachtung zugänglich ist. Darüber hinaus ist die Penningentladung 2 derart ausgebildet, daß sehr kleine Drücke eingelassen und wieder abgepumpt werden können Es sind deshalb große Abpumpstutzen (nicht dargestellt) vorgesehen. Für diese Arbeitsweise werden in Verbindung mit der Penningentladung 2 stärkere Magnete verwendet, als dies bei handelsüblichen Penningentladungen der Fall ist.

Hinter dem Austrittsspalt 1.4 ist eine Detektorvorrichtung 3 angeordnet. Die Detektorvorrichtung 3 umfaßt eine Mikrosphärenplatte 3.1. Auf einer Oberfläche 3.2 der Mikrosphärenplatte 3.1 ist eine Beschichtung aus Magnesiumfluorid (MgF2) ausgebildet. Zwischen einer Eintrittsöffnung 3.3 und der Oberfläche 3.2 ist in der Detektorvorrichtung 3 ein Repeller 3.4 angeordnet. Der Repeller 3.4 umfaßt ein Drahtgitter, welches in dieser Ausführungsform ca. 2 mm vor der Oberfläche 3.2 der Mikrosphärenplatte 3.1 angebracht ist und über eine Spannungsdurchführung auf ein Potential gelegt ist, das vorbestimmt sein kann. Dieses Potential hindert die beim Auftreffen der VUV-Strahlung auf die Magnesiumfluorid-Beschichtung entstehenden Elektronen daran, sich von der Oberfläche in Richtung auf das Gitter zu entfernen.

Die beschriebene Ausführungsform schließt die Lücke der bisher fehlenden Möglichkeit des Nachweises der Heliumkonzentration in einer Deuteriumumgebung nahe eines Fusionsexperimentes (mit magnetischem Einschluß). Der Erfindungsgegenstand kann jedoch auch für andere Zwecke, die einen Nachweis von VUV-Photonen beinhalten, Anwendung finden.

Die Erfindung ermöglicht die Durchführung eines Meßverfahrens zur Partialdruckmessung in einer Umgebung mit (hohen) Magnetfeldern.

## Patentansprüche

1. Detektorvorrichtung für ein Vakuum-Ultraviolett (VUV)-Spektrometer zum Nachweis einer VUV-Strahlung mit einer als Sekundärelektronenvervielfacher wirkenden Mikrosphärenplatte (MSP),
**dadurch gekennzeichnet,**
**daß** auf der Mikrosphärenplatte (3.1) eine Beschichtung aus Magnesiumfluorid (MgF2) ausgebildet ist.

2. Detektorvorrichtung nach Anspruch 1,
**dadurch gekennzeichnet,**
**daß** die Beschichtung auf der stromaufwärtsliegenden Oberfläche (3.2) der Mikrosphärenplatte (3.1) ausgebildet ist.

3. Detektorvorrichtung nach Anspruch 1 oder 2,
**dadurch gekennzeichnet,**
**daß** im Strahlungsweg stromaufwärts der Mikrosphärenplatte (3.1) ein Repeller (3.4) angeordnet ist.

4. Detektorvorrichtung nach Anspruch 3,
**dadurch gekennzeichnet,**
**daß** der Repeller (3.4) ein Drahtgitter umfaßt, das ein vorbestimmtes Spannungspotential aufweist.

5. Detektorvorrichtung nach Anspruch 3 oder 4,
**dadurch gekennzeichnet,**
**daß** der Repeller (3.4) in geringem Abstand vor der Mikrosphärenplatte (3.1) angeordnet ist.

6. Spektrometeranlage mit einem VUV-Spektrometer, das einen Eintrittsspalt und einen Austrittsspalt aufweist, und mit einer Detektorvorrichtung,
**dadurch gekennzeichnet,**
**daß** eine Penningentladung (2) vor dem Eintrittsspalt (1.3) und die Detektorvorrichtung (3) vor dem Austrittsspalt (1.4) angebracht ist, wobei die Detektorvorrichtung (3) eine mit Magnesiumfluorid (MgF2) beschichtete Mikrosphärenplatte (3.1) umfaßt.

7. Spektrometeranlage nach Anspruch 6,
**dadurch gekennzeichnet,**
**daß** die Beschichtung auf der stromaufwärtsliegenden Oberfläche (3.2) der Mikrosphärenplatte (3.1) ausgebildet ist.

8. Spektrometeranlage nach Anspruch 6 oder 7,
**dadurch gekennzeichnet,**
**daß** im Strahlungsweg zwischen dem Austrittsspalt (1.4) des VUV-Spektrometers (1) und der Mikrosphärenplatte (3.1) ein Repeller (3.4) angeordnet ist.

9. Spektrometeranlage nach Anspruch 8,
**dadurch gekennzeichnet,**
**daß** der Repeller (3.4) ein Drahtgitter umfaßt, das ein vorbestimmtes Spannungspotential aufweist.

10. Spektrometeranlage nach Anspruch 8 oder 9,
**dadurch gekennzeichnet,**
**daß** der Repeller (3.4) in geringem Abstand vor der Mikrosphärenplatte (3.1) angeordnet ist.

11. Mikrosphärenplatte zur Sekundärelektronenvervielfachung
**gekennzeichnet durch**
ein mit Magnesiumfluorid (MgF2) beschichtete Oberfläche.

## Claims

1. A detector device for a vacuum ultraviolet (VUV) spectrometer that is used for detecting VUV radiation, with a microspherical plate (MSP) that acts as an electron multiplier,
**characterized in that**
the microspherical plate (3.1) is provided with a coating of magnesium fluoride (MgF2).

2. The detector device according to Claim 1,
**characterized in that**
the coating is arranged on the upstream surface (3.2) of the microspherical plate (3.1).

3. The detector device according to Claim 1 or 2,
**characterized in that**
a repeller (3.4) is arranged in the beam path upstream of the microspherical plate (3.1).

4. The detector device according to Claim 3,
**characterized in that**
the repeller (3.4) comprises a wire screen that has a predetermined potential.

5. The detector device according to Claim 3 or 4,
**characterized in that**
the repeller (3.4) is arranged a short distance in front of the microspherical plate (3.1).

6. A spectrometer arrangement with a VUV spectrometer that contains an inlet gap and an outlet gap, and with a detector device,
**characterized in that**
a Penning discharge (2) is arranged in front of the inlet gap (1.3) and the detector device (3) is arranged in front of the outlet gap (1.4), wherein the detector device (3) comprises a microspherical plate (3.1) that is coated with magnesium fluoride (MgF2).

7. The spectrometer arrangement according to Claim 6,
**characterized in that**
the coating is arranged on the upstream surface (3.2) of the microspherical plate (3.1).

8. The spectrometer arrangement according to Claim 6 or 7,
**characterized in that**
a repeller (3.4) is arranged in the beam path between the outlet gap (1.4) of the VUV spectrometer (1) and the microspherical plate (3.1).

9. The spectrometer arrangement according to Claim 8,
**characterized in that**
the repeller (3.4) comprises a wire screen that has a predetermined potential.

10. The spectrometer arrangement according to Claim 8 or 9,
**characterized in that**
the repeller (3.4) is arranged a short distance in front of the microspherical plate (3.1).

11. A microspherical plate for use as an electron multiplier,
**characterized in that**
a surface is coated with magnesium fluoride (MgF2).

## Revendications

1. Dispositif à détecteur pour spectromètre à ultraviolet à vide (UVV) servant à démontrer la présence d'un rayonnement UVV, comportant une plaque à microsphère (PMS) agissant comme multiplicateur électronique secondaire,
**caractérisé en ce que**
un revêtement en fluorure de magnésium (MGF2) est réalisé sur la plaque à microsphère (3.1).

2. Dispositif à détecteur selon la revendication 1,
**caractérisé en ce que**
le revêtement est réalisé sur la surface amont (3.2) de la plaque à microsphère (3.1).

3. Dispositif à détecteur selon la revendication 1 ou 2,
**caractérisé en ce que**
un réflecteur (3.4) est disposé dans la trajectoire du rayonnement en amont de la plaque à microsphère (3.1).

4. Dispositif à détecteur selon la revendication 3,
**caractérisé en ce que**
le réflecteur (3.4) est une grille en fil de fer qui présente un potentiel de tension prédéfini.

5. Dispositif à détecteur selon la revendication 3 ou 4,
**caractérisé en ce que**
le réflecteur (3.4) est disposé à faible distance devant la plaque à microsphère (3.1).

6. Installation spectrométrique comportant un spectromètre à UVV qui présente une fente d'entrée et une fente de sortie, et un dispositif à détecteur,
**caractérisée en ce que**
une décharge de Penning (2) est installée devant la fente d'entrée (1.3) et le dispositif à détecteur (3) devant la fente de sortie (1.4), le dispositif à détecteur (3) comprenant une plaque à microsphère (3.1) revêtue de fluorure de magnésium (MgF2).

7. Installation spectrométrique selon la revendication 6,
**caractérisée en ce que**
le revêtement est réalisé sur la surface amont (3.2) de la plaque à microsphère (3.1).

8. Installation spectrométrique selon la revendication 6 ou 7,
**caractérisée en ce que**
dans la trajectoire de rayonnement entre la fente de sortie (1.4) du spectromètre à UVV (1) et la plaque à microsphère (3.1) est disposé un réflecteur (3.4).

9. Installation spectrométrique selon la revendication 8,
**caractérisée en ce que**
le réflecteur (3.4) comprend une grille en fil de fer qui présente un potentiel de tension prédéfini.

10. Installation spectrométrique selon la revendication 8 ou 9,
**caractérisée en ce que**
le réflecteur (3.4) est disposé à faible distance devant la plaque à microsphère (3.1).

11. Plaque à microsphère pour la multiplication électronique secondaire,
**caractérisée par**
une surface revêtue au fluorure de magnésium (MgF2).
